# EUROPEAN PATENT SPECIFICATION

(11) **EP 2 453 454 B1**
(45) Date of publication and mention of the grant of the patent: **28.10.2015**
(21) Application number: 10797361.2
(22) Date of filing: 14.05.2010
(51) Int. Cl.: H01F 41/02, H02K 15/12

(54) **METHOD FOR MANUFACTURING ELECTROTECHNICAL ARTICLES**
VERFAHREN ZUR HERSTELLUNG ELEKTROTECHNISCHER ARTIKEL
PROCÉDÉ DE FABRICATION D'ARTICLES ÉLECTROTECHNIQUES

(30) Priority: 08.07.2009 RU 2009125706
(43) Date of publication of application: 16.05.2012
(73) Proprietor: Twin Technology Company (OOO), Moscow 119330 (RU)
(72) Inventor: ABRAMOV, Yakov Kuzmich, Moscow 109202 (RU); VESELOV, Vladimir Mihailovich, Moscow 123181 (RU); ZALEVSKY, Viktor Mihailovich, Moscow 125080 (RU); EVDOKIMOV, Vladimir Dmitrievich, Moscow 127083 (RU); TAMURKA, Vitaly Grigorevich, Moscow 109386 (RU); VOLODN, Veniamin Sergeevich, Moskovskaja obl. 142700 (RU); MIRONOV, Boris Ivanovich, Moscow 109544 (RU)
(74) Representative: Dennemeyer & Associates S.A.
(86) International application number: PCT/RU2010/000241
(87) International publication number: WO 2011/005140

(56) References cited:
- DE-A1- 3 419 336
- FR-A1- 2 590 744
- FR-A1- 2 590 744
- GB-A- 1 237 265
- JP-A- S59 214 209
- KR-B1- 100 256 844
- RU-C1- 2 138 899
- RU-C1- 2 138 899
- RU-C2- 2 231 196
- RU-C2- 2 231 196
- RU-U1- 7 558
- SU-A1- 671 664
- US-A- 4 095 557

## Description

The invention relates to electrical engineering, in particular, the manufacturing of electrical devices, for example, large-sized windings of power transformers, based on vacuum impregnation thereof with polymer compounds and vacuum drying.

Currently in use is the method of vacuum-forced impregnation with varnish (under patent of the Russian Federation No. 2192702 (MPK N02K15/12) which is realized by means of impregnation of heated stator windings with varnish in hermetically sealed inside cavity of the stator frame. Then vacuum treatment of the stator winding is performed, followed with pressure rise to 0.3 MPa.

A disadvantage of the method is limited application. The method cannot be directly applied to impregnation of transformer windings because the winding elements to be impregnated are located outside the power core. An autoclave for impregnation of large-sized windings (of a diameter up to and including 2m and of height up to and including 3m) is expensive. An autoclave of such dimensions being operated under pressure should be registered in the Federal Committee for Mining and Industrial Supervision authorities which increases its operating costs.

Patent of the Russian Federation No. 2199810 (MPK RF N02K 5/12, F26B 9/06) presents a plant for drying electrical devices including large-sized ones, in which heaters, a fan, a duct for air recirculation, dampers, and automatic control devices are installed. Hot air recirculation is performed by means of change of positions of the dampers in the air ducts which control the amount of hot air containing solvent vapours being removed through extract ventilation.

The disadvantage of the plant is that the allowable concentration of solvent vapours in the drying chamber is provided by means of removing air saturated with solvent vapours through the ventilation system which results in an irrecoverable loss of solvents and deterioration of the environmental characteristic of the plant.

Currently in use is the method of manufacturing electrical devices (patent of the Russian Federation No. 2231196 (MPK N02K15/12) in which the processes of heating, impregnation, degassing, drying and polymerization are performed under vacuum in plants insulated from air, and pulse vacuum treatment process is performed by cycles, step by step using quick response valves, a pipe and a receiver in which design pressure is preset in such a way so as to ensure the pressure level below the equilibrium pressure level of the solvent vapours at that temperature and at each operation cycle in each plant.

The plant for implementation of the method (patent of the Russian Federation No. 2231196 (MPK N02K15/12) comprises heated plants insulated from air (for varnishing, impregnation of the device with varnish and drying thereof) connected to a receiver and a vacuum pump. In the plants of the installation a process of cyclic pulse vacuum treatment is performed by means of quick response valves and a pipe. High temperature liquid AMT-300 at 225 to 250 °C is used to heat-up the drying plant.

The disadvantage of this method and the plant include poor cementing capacity of the varnish coating required because of poor polymerization of the varnish residue during drying of the varnish coating. Varnish polymerization is intensified with oxygen molecules which diffuse into varnish from the environment. The concentration of oxygen molecules is small in vacuum, which results in reduction of the velocity and degree of polymerization of the varnish. While drying, the heating up of impregnated devices due to heat transfer (under reduced pressure and generally by means of heat radiation) from the walls of the plant at the temperature above 225 °C does not ensure a uniform warming-up of the devices such as multilayer transformer windings (including the spacings between the layers). Overheating of the outer layers of the windings above 120 °C may occur, which is unallowable for insulation of cellulosic material because this results in accelerated heat ageing of the insulation and decreases operating time of the transformer.

The closest analogue of the above method is the method stated in patent of the Russian Federation No. 2138899 (MPK N02K15/12, N01F41/02). According to this method prior to impregnation both the impregnating material and the devices (after warming-up thereof) are degassed under a vacuum-pulse mode under residual pressure of 0.1 to 13.3 kPa (0.7 to 100 mm Hg) separately. The impregnation of devices with varnish is performed during heating-up of the varnish, for example for ML-92 varnish widely used in the electric industry, up to the temperature of at least 70 to 75 °C using 3 to 5 cycles of vacuum pulse build-up to 0.1 to 13.3 kPa and vacuum relief to atmospheric pressure.

Devices impregnated with ML-92 varnish are heated up at atmospheric pressure during 1.5 to 2 hours up to 110-130 °C followed by 3 to 5 cycles of pulse vacuum treatment at the residual pressure of 0.1 to 13.3 KPa (0.75 to 100 mm Hg) and vacuum exposure during 5 to 10 min.

The disadvantage of this closest analogue method is that according to the proposed method the film-forming process occurs on the varnish surface after warming-up of the impregnated devices during 1.5 to 2.0 hours while drying. The series of quick pulse vacuum treatment following the warming-up results in formation of bubbles of solvent vapours (especially, in a thick varnish layer) a part of which cannot penetrate through the surface film and forms a porous structure of the varnish layer, which decreases its mechanical strength and the cementing capacity and results in reduction of the quality of impregnation. In addition, the key solvents of ML-92 varnish such as butanol and xylene boil under the proposed conditions of varnish preparation and impregnation of devices at 70 to 75 °C and the pressure of 0.75 to 100 mm Hg. Especially vigorous boiling occurs in presence of evaporation centres. These centres form residual air escaping the pores of cellulose insulation of the power transformer, and the surface of insulation is microstructural (paper, cardboard). Boiling of solvents on the interface of two phases (liquid and solid) results in reduction of the quality of impregnation, because the air in the pores of insulation is substituted with the vapours of solvents, and the reduction of the weight content of solvents increases varnish viscosity in the local area, that is near the surface of the insulation. All this prevent the varnish from penetration into the pores of insulation thus reducing the quality of impregnation.

The closest analogue of the plant realizing the above method is the plant for impregnation and drying of electrical devices as per patent of the Russian Federation PM No. 7558 MPK N02K15/12.

The plant includes heated vacuum plants used for heating up and degassing (preparing) the impregnating material, impregnating the devices, drying and polymerization of the impregnated devices. The plants are connected with quick response valves by means of vacuum pipes, a receiver and a pump, and atmosphere. A drops separator and condensing heat exchangers are installed before the receiver. A vacuum pump is installed after the receiver.

Preparation of the varnish and devices for impregnation and drying of devices impregnated with varnish are performed in the respective plants under pulse vacuum treatment using a receiver and quick response valves. The volume of the receiver shall exceed the volume of each plant by at least 10 times.

A disadvantage of this plant is that it allows varnish carryover from the plants, and the varnish is collected in the varnish drops separator after it has passed through the respective quick response electric valve. Regular penetration of varnish (and subsequent drying thereof) into quick response valves reduces the operating life of these expensive devices. Therefore, regular washing of the electric valves is required and, consequently, dismantling thereof.

The proposed design of the plant cannot allow full reception of solvent vapours because the condensing heat exchangers are installed upstream the receiver, and the period when the solvent vapour mixture in the air extracted from the plants is less than 0.1 s. Quick vacuum treatment should ensure pressure in the plants of less than 100 mm Hg during less than 0.1 s, that is pressure equalization should be achieved during not more than 0.1 s both in the plant and the receiver (consequently, in the condensing heat exchanger). Besides, the condensation of solvent vapours takes place under vacuum because both in the condensing heat exchanger and in the receiver the pressure falls into the range of from 0.7 to 100 mm Hg during the time of plant operation. Therefore, taking into account the short cooling time and a considerable reduction of thermal conductivity of the solvent vapours and air mixture due to reduced pressure the condensing heat exchanger should be characterised with a large heat exchange surface (that exceeding that of standard heat exchangers by hundreds of times) to ensure full reception of solvent vapours.

All this results in insufficient operating performance of the plant and makes it difficult to meet the environmental requirements.

The engineering problem of the invention is creation of conditions to manufacture electrical devices with no defects typical for the closest analogue method as well as for a plant convenient for operation and satisfying the requirements of industrial hygiene, environment protection and fire and explosion safety.

The target goal is achieved by means of the method of manufacturing electrical devices according to claim 1.

Prior to removing the device after impregnation the device should be blasted with atmospheric air under vacuum to prevent solvent vapours from penetrating the air.

To realize this method, a plant for manufacturing electrical devices which is not part of the present invention, including heated vacuum plants for preparation of varnish, impregnation of devices with varnish, drying and polymerization, which are connected with the receiver, the pump, the atmosphere and the condensing heat exchangers through quick response valves by means of a system of vacuum pipes, is additionally furnished with a heat recovery heat exchanger and an air heating unit connected in series through the closed circuit system by means of pipes with stop valves, to the plant used for drying the varnish and polymerization thereof, the heat recovery heat exchanger and one of the condensing heat exchangers with the second condensing heat exchanger installed after the vacuum pump.

The plant can be additionally furnished with a cooling plant for cooling the devices after drying and polymerization thereof.

The plant can be additionally furnished with one or more drying and polymerization plants to be installed in parallel, provided that the time required for drying and polymerization exceeds that required for impregnation.

The proposed modes of the method and the conditions required for its implementation allow for exclusion of the defects typical for the closest analogue method and thereby improve the quality of the devices by means of increasing the cementing capacity of the varnish film. In the drying plant the thermal-oxidative process of varnish polymerization is intensified by means of blasting of the impregnated device with hot air (at up to 120°C) thereby providing a continuous blasting of solvent vapours from the varnish surface and supply of new portions of air with the oxygen diffusing into the varnish.

In varnish preparation and impregnation plants the temperature is preset so as to exclude vigorous boiling of varnish solvents on the interface of the liquid and solid phases and consequently exclude the possibility of foaming: the pressure is above 13.3 kPa (100 mm Hg) and the temperature is up to 50°C.

Meeting the requirements on environment protection and industrial hygiene is ensured by means of hot air flowing in a closed circuit, and in order to ensure the concentration of solvent vapours to be lower to satisfy the requirements of fire and explosion safety the air saturated with vapours is cooled to the temperature of not above 10°C.

Due to use of the condensing heat exchanger the concentration of varnish solvent vapours in the air and in the drying and polymerization plant and all along the hot air duct does not exceed the allowed threshold of fire and explosion safety. Heat recovery process in the heat recovery heat exchanger reduces power consumption for drying.

The invention is illustrated with fig. showing the block diagram of the plant used to implement the method for impregnation of the windings of electrical devices with varnish, and drying and polymerization thereof.

The plant includes the following airproof apparatuses: an apparatus for varnish preparation (AVP) 1, an apparatus for impregnation (AI) 2, an apparatus for varnish drying (AVD) 3, and an apparatus for cooling of the winding (ACW) 4. All plants are furnished with cases to heat the walls thereof with a heat medium: for AVP 1 and AI 2 the temperature of the heat medium is 50 to 80 °C, for AVD 3 the temperature of the heat medium is 120 °C, and for ACW 4 the temperature of the water (used as a cooling agent) is up to to 10 °C. All plants are furnished with shutoff mechanical valves and vacuum valves with electromechanical drives, as well as with thermocouples and pressure transmitters.

The plant is equipped with a heat recovery heat exchanger 9 and an air heating unit 8.

AVP 1, AI 2 and AVD 3 are connected to the receiver 5 by means of vacuum quick response valves with electromagnetic drives and a vacuum pipe. Pumping out of the receiver is provided by means of the vacuum pump 6 with the exhaust entering the condensing heat exchanger 7 where the final reception of varnish solvent vapours occurs.

Hot air with looped flow with the temperature of 120 °C is delivered from the air heating unit 8 into AVD 3. After AVD 3 the air enters the first chamber of the heat recovery heat exchanger 9, then the condensing heat exchanger 10 and then through the second chamber of the heat recovery heat exchanger 9for preheating and then to the input of the air heating unit 8.

Steam used to heat the plants and units is supplied to the heat medium heating-up unit 11 where the heat medium (water, oil or steam) of the preset temperature is obtained using a steam injector.

In order to accelerate cooling of the devices ACW 4 is blasted with air which can be precooled.

A chiller is used to obtain a cooling agent (water or antifreezing agents).

The pump 12 intensifies heating of the varnish by means of the walls of AVP 1 and ensures mixing of the solvents or a new portion of varnish added into AVP 1.

The proposed method is implemented as follows: AVP 1 is filled with varnish and solvent (as required) by means of vacuum with running pump 12 and operating heating-up to supply the case of the plant with the heat medium. Degassing of varnish occurs during vacuum pumping and heating of the varnish.

The transformer winding is put into AI 2 which is preheated to the temperature of 50°C. The winding with the temperature of 45 to 55°C and insulation humidity of less than 1.5% is delivered from the factory drying chamber. The weight of the winding is up to 2.5 tons.

Following the sealing of AI 2 quick vacuum build-up is performed by means of connecting AI 2 to the receiver 5 (pre-vacuumed to 1 mm Hg) to remove adsorbed water.

### Transfer of the varnish from AVP into AI

AVP 1 should be connected to hot air duct (for vacuum relief), pump 12 should be stopped and the valves connecting AVP 1 and AI 2 opened. Varnish is transferred into AI 2 due to pressure difference. The process is controlled by means of a level glass installed in AI 2.

### Impregnation of the winding with varnish

After supplying varnish into AI 2 the valves connecting AI 2 to AVP 1 and to receiver 5 are closed. In AI 2 vacuum relief is performed by means of opening the valve in the air duct, and exposure is performed during 10 min at atmospheric pressure.

In AI 2 pressure is reduced to 100 mg Hg using quick vacuum treatment (automatically controlled with pressure transmitter), the valve is closed in the vacuum pipe and exposure takes place during 5 min. A vacuum relief achieved through opening the valve in the air duct supplying AI 2, and exposure is performed at atmospheric pressure during 10 min. This operation is performed twice.

The selected vacuum levels, that is, the pressure of at least 100 mm Hg (13.3 kPa) and the temperature of not more than 50°C, provide for performing the process of impregnation with varnish with no intensive generation of vapours on the interface of the liquid (varnish) and solid (insulation) phases. This reduces the time of impregnation and excludes foaming in AI 2 and thereby eliminates the requirement for using additional devices, that is, a drops separator, which reduces the price of the plant.

With the valve in the air duct supplying AI 2 and the valve connecting AI 2 to AVP 1 opened the valve in the vacuum pipe to AVP 1 opens, and varnish is discharged from AI 2. The completion of the discharge process is controlled with the lower level glass installed in AI 2. To reduce the time of varnish discharge the pumping can be performed with operating pump 12.

After that, vacuum removing of excessive varnish from the winding is performed. In AI 2 pressure is reduced to 100 mg Hg using quick vacuum treatment, the valve in the vacuum pipe closes and exposure takes place during 5 min. Vacuum relief is performed by means of opening the valve in the air duct supplying AI 2, and exposure is performed at atmospheric pressure during 10 min. This operation is performed twice.

After removal of the varnish AI 2 is exposed to vacuum for 0.5 min, then it is filled with air and opens to remove the impregnated winding and put in the new one.

### Drying and polymerization of varnish in AVD

Impregnated winding is placed into AVD 3 with the walls thereof preheated to 120°C and the lid is closed.

Air preheated to ~120°C is delivered into AVD 3 to accelerate heating up of the winding and to increase the degree of polymerization of the varnish. The temperature of heating of the winding is estimated by means of the temperature difference between the supply and extract air in AVD 3.

Upon achieving the temperature of winding of 70 to 80 °C the valves in the supply and extract air ducts are closed and a quick vacuum treatment is performed in AVD 3. The pressure in AVD 3 is reduced to 100 mm Hg (below the saturated vapour pressure for the main solvents of ML-92 varnish: xylene and butanol within this temperature range) and intensive evaporation of varnish solvents takes place.

After vacuum exposure during 15 min in AVD 3 heating of the device and drying of the varnish with hot air continue: the valves are open in the hot air ducts supplying AVD 3. Upon achieving the temperature of the winding of 80 to 90°C the above operations are repeated: quick vacuum treatment and the exposure processes.

Further, drying with hot air continues upon achieving the temperature of the winding of ~115 to 120 °C, and exposure lasts for not more than 4 hours at this temperature.

Prior to removing the winding from AVD 3 AVD 3 is blasted with atmospheric air. At the same time the air supply valves and the valves installed in the vacuum pipes are open. After vacuum relief is carried out the lid of AVD 3 opens and the winding is removed.

Dried winding is placed into ACW 4 for cooling.

### Cooling the winding in ACW

In ACW 4 the winding cooling process is performed due to heat absorption by the plant walls which are cooled with a cooling agent in the plant case to 8 to 10 °C and a blast with cool air. The temperature of the winding is determined by the temperature of the air extracted from ACW 4.

The time required for cooling of the winding with the weight of -2.5 tons under the temperature of 50 to 55 °C is at least 2 hours.

Environment protection, explosion safety, and energy saving.

To reduce the amount of vapours of solvents of toxicity class 3 and 4 discharged into air the extract of vapour and air mixture from the vacuum pumps is cooled in the condensing heat exchanger 7 where the temperature of the vapour and air mixture is reduced below 10°C, the vapours of solvents are condensed and recovered and are supplied to AVP 1 upon filtration thereof.

The most part of the vapours of varnish solvents is caught and removed with hot air used for heating thereof in AVD 3 during drying of the winding. To prevent the vapours of solvents from penetrating both the work area and the atmosphere the air flow is closed in a circuit. In order to avoid formation of an explosive mixture of varnish vapours and air extracted from AVD 3 in the process of drying the winding this mixture is cooled in the condensing heat exchanger 10 to the temperature below 10°C. The concentration of solvent vapours in the air determined by the pressure of saturated solvent vapours under this temperature is out of inflammability limit (below its lowest threshold): from 1 to 6.7 vol.%. The formed vapour condensate is supplied back to AVP 1 after filtration thereof.

In the process of drying of winding with hot air reduction of energy losses is provided for using a heat recovery heat exchanger 9 installed downstream AVD 3. Hot air from AVD 3 is supplied into the first chamber of the heat recovery heat exchanger 9, then passes through the condensing heat exchanger 10 and having been cooled to the temperature below 10°C is supplied into the second chamber of the heat recovery heat exchanger 9 where it is preheated (using the heat of the air extracted from AVD 3) before being supplied into the air heating unit (thermofan) 8.

Using of pressure transmitters, temperature transmitters, level glasses, valves and gates with electric drives allows for automating the operations of impregnation, drying and cooling of the windings in each plant (AVP, AI, AVD, ACW). This increases the performance of the plants and reduces the power consumption for manufacturing of finished devices, that is, devices (windings) impregnated with varnish.

Maximum technical and economical effects can be obtained by means of using the method and the plant when manufacturing of power transformers, namely impregnating of large-sized windings of diameter up to and including 2 m, of height up to and including 3m, and of weight up to and including 2.5 t.

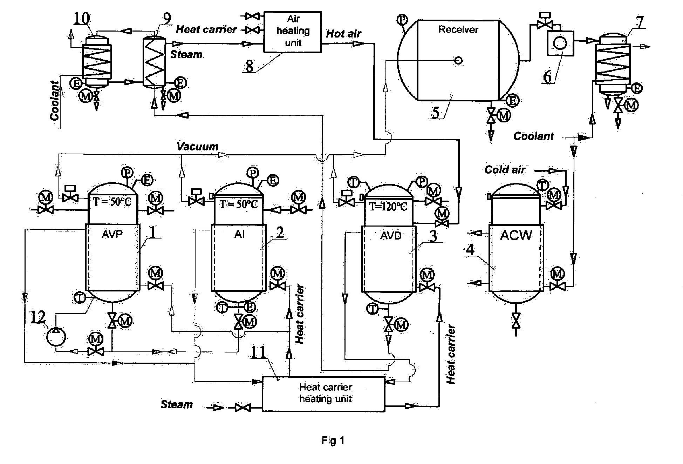

## Claims

1. A method for manufacturing electrical devices, primarily transformer windings, comprising a step of filling an apparatus with varnish and solvent for varnish preparation, heating up of varnish and degassing thereof, vacuum treatment of the device, impregnation thereof with varnish and drying thereof under cyclic high-speed vacuum treatment which ensures pressure in the plants of less than 13,3 KPa (100 mm Hg) during less than 0.1 s, with vacuum relief to atmospheric pressure **characterized in that** the drying process under the cyclic high-speed vacuum treatment is performed after preheating the electrical device before applying the high-speed vacuum treatment, to at least the temperature of the saturated vapour of the solvent and at pressure of the pulse vacuum treatment, and at the end of each cycle of the high-speed vacuum treatment the device is blasted with hot air at the temperature of not more than 120°C, and the processes of heating and degassing of varnish and impregnation of the device therewith are performed at the temperature of not more than 50°C and the pressure of at least 13 kPa.

2. The method of claim 1 **characterized in that** to prevent solvent vapours from being extracted into air the chamber is vacuum blasted with atmospheric air before removal of the device after impregnation or drying.

## Patentansprüche

1. Verfahren zur Herstellung elektrischer Geräte, hauptsächlich Transformatorwicklungen, umfassend einen Schritt des Befüllens des Apparats mit Lack und Lösungsmittel zur Lackierungsvorbereitung, Erhitzen des Lacks und Entgasen desselben, der Vakuumbehandlung des Geräts, der Imprägnierung desselben mit Lack und des Trocknens desselben unter zyklischer Hochgeschwindigkeits-Vakuumbehandlung, welche den Druck in den Anlagen von höchstens 13,3 kPa während höchstens 0,1 S sicherstellt, mit Unterdruckbegrenzung des Atmosphärendrucks, **dadurch gekennzeichnet, dass** das Trockenverfahren während der zyklischen Hochgeschwindigkeits-Vakuumbehandlung nach dem Vorheizen des elektrischen Geräts vor der Anwendung der Hochgeschwindigkeits-Vakuumbehandlung bis wenigstens zur Temperatur des gesättigten Dampfes des Lösungsmittels und dem Druck der Takt-Vakuumbehandlung durchgeführt wird und wobei das Gerät am Ende jedes Zyklus der Hochgeschwindigkeits-Vakuumbehandlung mit heißer Luft bei einer Temperatur von höchstens 120 °C bestrahlt wird und die Verfahren zum Erhitzen und Entgasen des Lacks sowie der Imprägnierung des Geräts mit demselben bei einer Temperatur von höchstens 50 °C und einem Druck von wenigstens 13 kPa durchgeführt wird.

2. Verfahren nach Anspruch 1, **dadurch gekennzeichnet, dass** die Kammer mit Atmosphärenluft vor Entfernen des Geräts nach dem Imprägnieren oder Trocknen vakuumbestrahlt wird, um Lösungsmitteldämpfe daran zu hindern, in die Luft befördert zu werden.

## Revendications

1. Procédé pour fabriquer des dispositifs électriques, principalement des enroulements de transformateur, comprenant une étape de remplissage d'un dispositif avec un vernis et un solvant pour la préparation de vernis, le chauffage du vernis et son dégazage, un traitement sous vide du dispositif, son imprégnation avec le vernis et le séchage de celui-ci par un traitement sous vide à grande vitesse cyclique qui assure une pression dans les installations inférieure à 13,3 kPa (100 mm Hg) pendant moins de 0,1 s, avec relâchement du vide jusqu'à la pression atmosphérique, **caractérisé en ce que** le procédé de séchage par traitement sous vide à grande vitesse cyclique est effectué après préchauffage du dispositif électrique avant application du traitement sous vide à grande vitesse, au moins jusqu'à la température de la vapeur saturée du solvant et sous la pression du traitement sous vide pulsé, et, à la fin de chaque cycle du traitement sous vide à grande vitesse, le dispositif est soufflé avec de l'air chaud à une température ne dépassant pas 120°C, et les procédés de chauffage et de dégazage du vernis et d'imprégnation du dispositif avec celui-ci sont effectués à une température ne dépassant pas 50°C et sous une pression d'au moins 13 kPa.

2. Procédé selon la revendication 1, **caractérisé en ce que**, pour empêcher les vapeurs de solvant d'être extraites dans l'air, la chambre est soufflée sous vide avec de l'air atmosphérique avant retrait du dispositif après imprégnation ou séchage.
